Europäisches Patentamt

European Patent Office

Office européen des brevets

(19)

(11) Numéro de publication : **0 558 429 A1**

(12) **DEMANDE DE BREVET EUROPEEN**

(21) Numéro de dépôt : **93420085.8**

(22) Date de dépôt : **24.02.93**

(51) Int. Cl.⁵ : **G01N 25/18**

(30) Priorité : **26.02.92 FR 9202476**

(43) Date de publication de la demande :
**01.09.93 Bulletin 93/35**

(84) Etats contractants désignés :
**CH DE GB IT LI NL**

(71) Demandeur : **PECHINEY RECHERCHE**
**(Groupement d'Intérêt Economique géré par**
**l'ordonnance no. 67-821 du 23 Septembre**
**1967)**
**10, place des Vosges Immeuble Balzac La**
**Défense 5**
**F-92400 Courbevoie (FR)**

(72) Inventeur : **Lacroix, Paul**
**156, chemin de Choulans**
**F-69005 Lyon (FR)**

(74) Mandataire : **Jacquet, Michel et al**
**PECHINEY 28, rue de Bonnel**
**F-69433 Lyon Cédex 03 (FR)**

(54) **Méthode de mesure simultanée de la résistivité électrique et de la conductivité thermique.**

(57)    L'invention concerne un dispositif et un procédé pour la mesure simultanée de la résistivité
électrique et de la conductivité thermique de
produits réfractaires, notamment carbonés.
    Le procédé consiste à chauffer une éprou-
vette cylindrique par passage d'un courant électrique croissant par paliers successifs, à
attendre qu'un champ de températures stable
soit établi dans l'éprouvette et à noter, à chaque
palier, la tension électrique entre deux points
symétriques par rapport au milieu de l'éprouvette, l'intensité électrique parcourant l'éprouvette et les températures en ces deux points
symétriques et au milieu de l'éprouvette.
Le traitement de ces données par ordinateur
permet de déterminer la résistivité électrique et
la conductivité thermique de l'éprouvette et leur
évolution en fonction de la température.
    Ce procédé s'applique à tous les produits
réfractaires présentant une certaine conductivité électrique et thermique, carbures, nitrures
et notamment aux produits carbonés.

FIG.2

EP 0 558 429 A1

## DOMAINE TECHNIQUE DE L'INVENTION.

L'invention concerne la mesure simultanée de la conductivité thermique à haute température et de la résistivité électrique de matériaux en prenant en compte la variation de cette résistivité en fonction de la température. Elle s'applique en particulier aux produits carbonés, graphite et carbone, mais aussi à d'autres produits réfractaires ayant une conductivité électrique non négligeable. Parmi ceux-ci, on peut citer des carbures tels les carbures de silicium, de tungstène, de titane, des nitrures tels les nitrures de silicium, de titane, de bore.

## RAPPEL DE L'ART ANTERIEUR.

Il faut ici rappeler les lois générales du transfert thermique. Le flux de chaleur q par unité de surface est égal à:

$$q = - K \, \text{grad} \, T$$

où K est la conductivité thermique et T la température.

Le flux net de chaleur au travers de la surface S délimitant un volume V est:

$$\iint_S q.dS = \iiint_V \text{div} \, q.dV$$

Si l'on appelle Q la quantité de chaleur générée par unité de temps et par unité de volume, m la masse volumique du milieu et c sa chaleur spécifique, on peut écrire l'équation suivante qui exprime simplement que la chaleur Q sert, d'une part à augmenter la température du volume dV et d'autre part à assurer le flux de chaleur au travers de la surface dS entourant dV:

$$m c \, \partial T/\partial t + \text{div} \, q = Q$$

ou encore:

$$m c \, \partial T/\partial t + \text{div} \, ( - K \, \text{grad} \, T) = Q \quad (1)$$

Deux cas particuliers sont importants:

1) le cas où le flux de chaleur est uniquement axial, selon l'axe des x. Dans ces conditions, les surfaces isothermes sont des plans perpendiculaires à cet axe, le gradient de température n'a pas de composantes radiales et

$$\text{div} \, ( - K \, \text{grad} \, T) = - K \, \partial^2 T/\partial x^2$$

L'équation (1) s'écrit alors:

$$m c \, \partial T/\partial t - K \, \partial^2 T/\partial x^2 = Q \quad (2)$$

Si, en outre, on est en régime stationnaire de température, $\partial T/\partial t = 0$ et l'on a:

$$Q = - K \, \partial^2 T/\partial x^2$$

2) Le cas où le flux de chaleur est uniquement radial, les surfaces isothermes étant des cylindres concentriques.

En utilisant les coordonnées cylindriques, avec r, le rayon comme seule variable, l'équation (1) s'écrit:

$$mc \, \partial T/\partial t - K \, \partial^2 T/\partial r^2 - 1/r.\partial T/\partial r = Q \quad (3)$$

De la même façon, en cas de régime stationnaire de température, $\partial T/\partial t = 0$ et l'équation (3) s'écrit;

$$- K \, \partial^2 T/\partial r^2 - 1/r.\partial T/\partial r = Q$$

Les méthodes de mesure de conductivité thermique peuvent être classées en:
- Méthodes en régime stationnaire ($\partial T/\partial t = 0$).
  a) Flux axial.
  b) Flux radial.
- Méthodes en régime transitoire ($\partial T/\partial t$ non = 0).
  a) Flux axial.
  b) Flux radial.

1°) Méthodes en "Régime stationnaire. Flux axiale. Elles peuvent être ramenées à deux:

Une méthode comparative dite de Klasse. Elle consiste à réaliser un empilement d'éléments comprenant l'éprouvette d'essai et des étalons de conductivité connue au travers duquel on fait passer un flux thermique unidirectionnel axial. Le gradient thermique dans chaque élément est proportionnel à son épaisseur et inversement proportionnel à sa conductivité. Dans ces conditions, la conductivité moyenne entre T1 et T2 de l'éprouvette, K(T1,T2) est donnée par la formule:

$$K(T1,T2) = K'(T'1,T'2) * e/e' * (T'1 - T'2)/(T1 - T2)$$

avec:

K'(T'1,T'2) conductivité thermique de l'étalon,

e épaisseur de l'éprouvette,

e' épaisseur de l'étalon,

T1 -T2 chute de température dans l'éprouvette,

T'1 -T'2 chute de température dans l'étalon.

La méthode du panneau (ASTM), consiste à mesurer le gradient thermique existant au sein d'un panneau et le flux thermique qui le traverse. La conductivité moyenne entre T1 et T2 est alors donnée par la formule:

$$K(T1,T2) = Q/S * e/(T2 - T1)$$

avec

Q, flux thermique,

S, surface du panneau,

e, épaisseur du panneau,

T2 - T1, gradient thermique dans le panneau.

2°) Méthode en "Régime stationnaire. Flux radial".

Elle consiste à mesurer le gradient thermique à l'intérieur d'une éprouvette cylindrique chauffée axialement ainsi que le flux thermique la traversant. La conductivité moyenne entre T1 et T2 de l'éprouvette, K(T1,T2) est donnée par la formule:

$$K(T1,T2) = Q/(2 * h) * Log( R2/R1) /(T2 - T1)$$

avec

Q, flux thermique,

h, hauteur du cylindre,

R1 et R2, rayons des mesures des températures T1 et T2.

3°) Méthode en "Régime transitoire. Flux axial".

Il s'agit de la méthode "Flash" qui consiste à envoyer un flash laser sur une des faces d'un échantillon en forme de pastille. On enregistre l'élévation de température de l'autre face parallèle en fonction du temps. On montre que la diffusivité d = K/mc est donnée par la formule:

$$d = 0,139 * e^2/T_{1/2}$$

avec

m, masse volumique,

c, capacité calorifique,

e, épaisseur de la pastille,

$T_{1/2}$, temps au bout duquel la moitié de la température maximale est atteinte.

4°) Méthodes en "Régime transitoire. Flux radial".

Il existe plusieurs méthodes:

La première est celle du flux sinusoïdal. L'échantillon, de forme cylindrique, muni d'un thermocouple au milieu de son axe, et d'un second sur la surface latérale est placé dans un four dont la température d'équilibre est modulée par une variation sinusoïdale: T = Teq + TO cos wt. A titre d'exemple, T, amplitude de l'oscillation est d'environ 25°C et w d'environ 0,07 min$^{-1}$. Si le flux axial est supposé négligeable, la diffusivité thermique peut être calculée à partir de la mesure du déphasage de température existant entre extérieur et intérieur du cylindre.

La deuxième est celle du fil chaud. Elle existe sous plusieurs variantes, parmi lesquelles les plus pratiquées sont celles du fil chaud standard et celle du fil chaud parallèle. Le principe commun consiste à mesurer l'élévation de température due à l'échauffement d'un fil placé dans l'axe d'une éprouvette cylindrique et émettant une puissance constante dans le temps et le long de l'éprouvette de mesure. Dans la méthode du fil chaud standard, le premier thermocouple est placé sur le fil chaud lui-même et le deuxième à une distance R2 de l'axe, proche de la surface externe de l'éprouvette. Dans la méthode du fil chaud parallèle, le premier thermocouple est placé à une distance R1 de l'axe et le deuxième à une distance R2, proche de la surface externe. L'exploitation des courbes de montée en température du couple à la distance R2 permet, dans l'un et l'autre cas, au prix de calculs qui ne seront pas détaillés ici, de déterminer la conductivité K.

5°) Une méthode originale appartenant au type "Régime stationnaire. Flux axial" peut enfin s'appliquer aux matériaux qui, comme le carbone et le graphite ont à la fois une conductivité thermique et une conductivité électrique relativement élevées. C'est la méthode KOHLRAUSCH. Elle consiste à faire passer dans l'échantillon un courant électrique qui sert à la fois de courant de mesure pour la conductivité électrique et de courant de chauffage pour la mesure de la conductivité thermique. Ainsi, on peut atteindre en une seule mesure, deux caractéristiques importantes de l'échantillon.

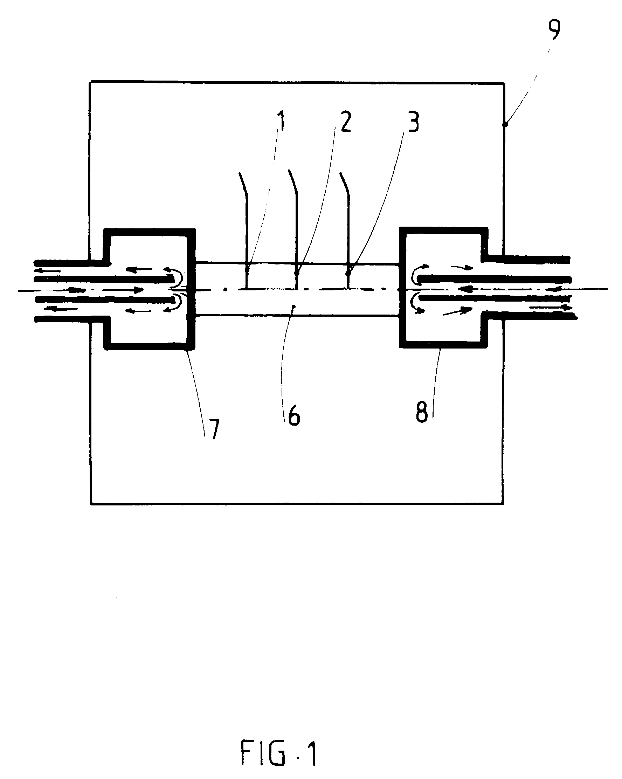

Le principe de la méthode est illustré par la figure 1.

On utilise une éprouvette cylindrique (6) par exemple de diamètre 20 mm et de hauteur 100 à 160 mm. Cette éprouvette est chauffée par effet Joule, le courant étant amené par deux pièces en cuivre refroidies (7) et (8) placées contre chacune des bases de l'éprouvette cylindrique. L'une est fixe et l'autre, destinée au serrage, est mobile.

L'éprouvette est percée de trous radiaux s'arrêtant sur l'axe de l'éprouvette de diamètre 1,25 mm par exemple: (1), (2), (3). Les trous (1) et (3) sont symétriques par rapport au trou (2) situé dans le plan perpendiculaire à l'axe du cylindre à mi-hauteur, à une distance de 30 mm par exemple. Dans chacun des trous (1), (2), (3) est placé un couple thermoélectrique dont la soudure est disposée sur l'axe du cylindre.

Ces couples thermoélectriques ont une double fonction: la mesure des températures respectives au fond des trous (1) à (3): $T_1$, $T_2$, $T_3$ et la mesure des différences de potentiel électrique entre le thermocouple central (2) et les thermocouples (1) et (3).

Afin de simplifier les équations de transfert thermique au sein de l'éprouvette,
- on s'arrange pour que le flux de chaleur soit uniquement axial, en direction des amenées de courant refroidies; le gradient de température a seulement une composante axiale;
- on fait les mesures de températures et de potentiel en régime stationnaire, lorsque les champs de température et de potentiel dans l'éprouvette se sont stabilisés et ne sont plus fonction du temps.

L'application de l'équation de transfert thermique aboutit par un calcul trivial à la relation suivante:

$$K \ = \ (U_{13} * I * 1)/2 * A * (2T_2 - T_1 - T_3)$$

avec

K, conductivité thermique,

$U_{13}$, différence de potentiel entre 1 et 3,

I, intensité du courant dans l'échantillon;

1, distance entre 2 et 1, ou entre 2 et 3

A, section de l'éprouvette,

$T_2$, $T_1$, $T_3$, températures en 2, 1, 3.

Pratiquement, la mesure se fait de la façon suivante: les amenées de courant sont refroidies par une circulation d'eau froide. L'appareillage est placé dans une étuve (9) dont la température est réglée à 30°C. On fait passer le courant dont on règle l'intensité pour que la température du thermocouple 2, $T_2$ se stabilise à 33°C. La mesure de la différence de potentiel entre 1 et 3, de l'intensité et des températures $T_1$ et $T_3$ permet de calculer le coefficient K.

Les méthodes exposées ci-dessus peuvent s'appliquer aux domaines de conductivité et de température indiqués dans le tableau ci-après:

| METHOD | CONDUCTIVITE | TEMPERATURE |
|---|---|---|
| KLASSE | 3-200 W/mK | 100-1000°C |
| PANNEAU | 0,05-5 | 200-1400°C |
| FLUX RADIAL | 2-100 | 200-2000°C |
| FLUX SINUSOIDAL | 0,2-10 | 500-1500°C |
| FIL CHAUD STANDARD | 0,015-1,5 | 0-1500°C |
| FIL CHAUD PARALLELE | 1,5-25 | 100-1200°C |
| KOHLRAUSCH | 2-250 | ambiante |

PROBLEME POSE.

Les carbones et graphites ont des conductivités comprises entre 2 et 200 W/m/K. Seule la méthode comparative de Klasse et celle de Kohlrausch s'approchent de cet intervalle. Mais la méthode de Klasse, d'une part, n'est pas absolue et nécessite des étalons et, d'autre part, elle est pratiquement limitée à 1000°C. Quant à la méthode de Kohlrausch, elle est limitée à 30°C. Or les températures d'utilisation de ces produits carbonés dépassent souvent ces températures. Le besoin se faisait donc sentir de mettre au point une méthode absolue, adaptée aux conductivités relativement élevées de ces produits et aux températures élevées.

DESCRIPTION DE L'INVENTION.

L'invention concerne un procédé et un dispositif pour la mesure simultanée des conductivités thermique et électrique à des températures pouvant atteindre 1300°C.

Ce procédé et ce dispositif sont dérivés de la méthode Kohlrausch à l'ambiante.

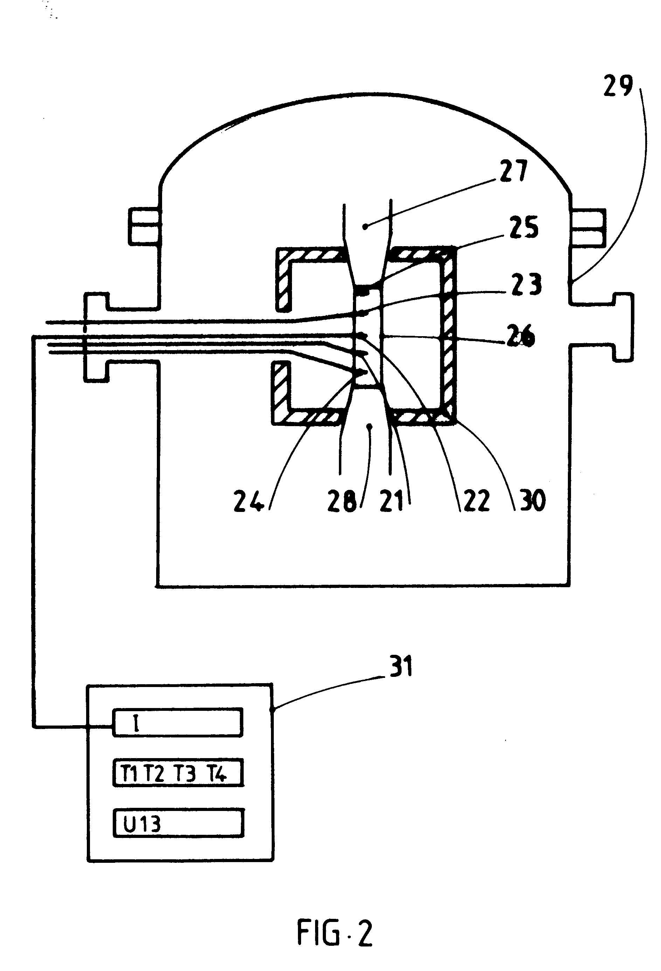

Le procédé est schématisé sur la figure 2 et il est caractérisé en ce que:

- on réalise à partir d'un échantillon du produit à tester une éprouvette cylindrique de section A et de longueur L que l'on perce sur une même génératrice de cinq trous radiaux arrêtés sur l'axe de l'éprouvette: en un point (22) situé au milieu de l'éprouvette, en deux points (21) et (23) symétriques par rapport au point (22) et situés entre le point (22) et les extrêmités de l'éprouvette à une distance 1 du point (22) et en deux points (24) et (25) proches des extrêmités de l'éprouvette et symétriques par rapport au point (22);
- on met en place l'éprouvette dans une enceinte (29) en serrant ses extrêmités entre deux pièces d'amenée de courant refroidies par circulation d'eau;
- on met en place des moyens de limitation du transfert thermique par rayonnement de l'éprouvette de façon à ce que le flux thermique dans l'éprouvette soit seulement axial;
- on met en place des couples thermoélectriques au fond des trous (21), (22), (23) et (24);
- on fait le vide dans l'enceinte jusqu'à $2.10^{-2}$ millibar et on attend 30 minutes avant de faire passer le courant dans l'éprouvette;
- on fait passer le courant sous une différence de potentiel déterminée
- on mesure en continu:
  a) les températures $T_2$, $T_1$, $T_3$ et $T_4$ aux points (22), (21), (23) et (24) ,
  b) la différence de potentiel U13 entre les points (21) et (23)
  c) l'intensité de courant I circulant dans l'éprouvette;
- on attend que les mesures de températures, de différence de potentiel et d'intensité se soient stabilisées;
- on calcule la résistivité à la température moyenne Tmoy = $(2*T_2 + T_1 + T_3)/4$ par la formule $\rho = U13*A/(I*21)$
- on passe alors à une différence de potentiel supérieure, on mesure les nouvelles températures $T_2$, $T_1$, $T_3$ et $T_4$, la nouvelles différence de potentiel et intensité et on calcule la nouvelle valeur de la résistivité à la nouvelle température moyenne ainsi que le coefficient de température a de la résistivité.
- on calcule alors la conductivité thermique non corrigée K à partir de la formule:

$$K = (U_{13} * I * 1)/2A(2T_2 - T_3 - T_1)$$

et la conductivité thermique corrigée de la variation de la résistivité en fonction du temps en multipliant K par un facteur de correction F qui est égal à:

$$(1/a + I - T_e) * a * (1 - (2/3) * a * \Delta T * (1/L)^2)/(1 - a * \Delta T)$$

dans laquelle Te est la température à l'extrémité de l'éprouvette, calculée par extrapolation et $\Delta$ T la différence $T_2 - T_e$;
- on procède enfin à plusieurs paliers de différences de potentiel, d'intensités et de régimes stationnaires de températures successifs ce qui permet de calculer la conductivité thermique et la résistivité électrique en fonction de la température.

Le dispositif de mesure comprend les parties essentielles suivantes:

a) l'éprouvette. Elle a été décrite de façon suffisamment précise dans le paragraphe précédent consacré au procédé.

b) une boite cylindrique (30), en grillage métallique revêtue sur ses parois d'une feuille de papier d'argent contenant l'éprouvette et les deux pièces d'amenée de courant, elle-même placée à l'intérieur d'une enceinte;

c) une enceinte (29) dans laquelle on peut faire le vide, fermée à sa partie supérieure par un couvercle amovible protégé du rayonnement par la feuille d'argent posée sur le bord supérieur de la boite et munie de plusieurs orifices pour:

- le raccordement à la pompe à vide,
- le passage des thermocouples,
- l'arrivée de gaz pour casser le vide,
- le raccordement à un jauge à vide,
- le passage des amenées de courant;

Le rôle de l'enceinte sous vide est de minimiser les pertes thermiques par conduction et convection et empêcher l'oxydation de l'éprouvette. Des essais ont montré qu'un vide primaire, compris entre $10^{-2}$ à $2.10^{-2}$ millibar ( 1 à 2 Pa) est suffisant.

Les pertes par rayonnement augmentent avec le rapport de la surface extérieure de l'éprouvette à la surface intérieure de la boite, avec la différence de température entre l'éprouvette et l'enceinte,avec l'émissivité des surfaces en regard. Pour minimiser ces pertes, on peut agir, soit sur les surfaces, soit sur leur émissivité.

Sur les surfaces: il est difficile de diminuer la surface extérieure de l'éprouvette, mais il est possible d'augmenter la surface intérieure de la boite en la portant au maximum compatible avec les dimensions de l'enceinte.

Sur l'émissivité: Afin de diminuer l'émissivité de l'éprouvette, elle est entourée, comme indiqué plus haut, d'un manchon de produit réfractaire à faible pouvoir émissif de quelques mm d'épaisseur. Afin de diminuer l'émissivité de la paroi interne de la boite en fibre de carbone, elle est revêtue d'une feuille d'argent. De même, le couvercle de l'enceinte est protégé du rayonnement par une feuille d'argent posée sur le bord supérieur de la boite.

d) une alimentation en courant électrique à l'aide d'un générateur de courant continu muni d'un variateur permettant de faire varier la tension délivrée. Ce générateur est relié à deux pièces en cuivre refroidies placées contre chacune des bases de l'éprouvette cylindrique. L'une est fixe et l'autre, destinée au serrage, est mobile. Des rondelles de papier de graphite sont disposées entre l'éprouvette et chacune des amenées de courant afin d'assurer un bon contact électrique.

e) des thermocouples disposés comme indiqué sur la figure 2. Ils ont une double fonction: mesure des températures et mesure des différences de potentiel.

f) une centrale de mesure (31) qui recueille et enregistre les variables mesurées: températures $T_1$, $T_2$, $T_3$, $T_4$ intensité I et différence de potentiel $U_{13}$.

g) un groupe de pompage destiné à mettre l'enceinte sous vide.

MODE OPERATOIRE DETAILLE.

a) On prépare une éprouvette cylindrique (26) du produit à tester, de diamètre 20 mm et de hauteur 100 mm par exemple. L'éprouvette est percée de trous radiaux s'arrêtant sur l'axe de l'éprouvette de diamètre 1,8 mm par exemple: (21), (22), (23), (24), (25). Le trou (22) est situé dans le plan perpendiculaire à l'axe du cylindre au milieu de cet axe. Les trous (21) et (23) sont symétriques par rapport au trou (22), à une distance 1, de 30 mm par exemple. Les trous (24) et (25) sont, eux aussi symétriques par rapport au trou (22) mais proches des arrivées de courant, à une distance de 45 mm par exemple. On met l'éprouvette en place entre deux arrivées de courant en cuivre refroidies par circulation d'eau (27) et (28) placées contre chacune des bases de l'éprouvette cylindrique. L'une est fixe et l'autre, destinée au serrage, est mobile. On interpose entre ces amenées de courant et l'éprouvette une rondelle de papier de graphite pour assurer un bon contact électrique et thermique. Enfin, on entoure l'éprouvette d'un manchon de feuille d'un produit réfractaire isolant destiné à diminuer les pertes par rayonnement. Dans chacun des trous (21) à (24) est placé un couple thermoélectrique dont la soudure est disposée sur l'axe du cylindre. Le trou (25) sert uniquement à assurer la symétrie de l'éprouvette.

Ces couples thermoélectriques ont une double fonction: la mesure des températures respectives au fond des trous (21) à (24): $T_1$, $T_2$, $T_3$, $T_4$ et la mesure des différences de potentiel électrique entre le thermocouple central (22) et les thermocouples (21) et (23).

Le couvercle de l'enceinte sous vide contenant l'éprouvette est mis en place, la circulation de l'eau dans les amenées de courant mise en route.

b) avant d'envoyer le courant dans l'éprouvette, on fait le vide pendant un temps suffisant, 30 minutes par exemple, pour bien dégazer l'éprouvette et les parois de l'enceinte. Il n'est pas nécessaire d'atteindre un vide très poussé: une pression résiduelle de 10-2 à 2.10-2 millibar ( 1 à 2 Pa) suffit généralement.

c) après cette période de dégazage, on procède au chauffage de l'éprouvette en appliquant aux deux arrivées de courant une différence de potentiel continue et régulée. On procède généralement par paliers successifs en attendant à chaque palier que les températures relevées dans l'éprouvette atteignent un régime stationnaire. En effet, ainsi qu'il a été dit plus haut, les mesures de conductivité thermique doivent être faites sous un tel régime afin que le terme dT/dt soit nul. Pratiquement, le régime stationnaire est atteint pour le premier palier au bout d'une trentaine de minutes, pour les paliers suivants au bout d'environ 5 à 10 minutes.

A chaque palier, on relève:
- la différence de potentiel $U_{13}$ entre les thermocouples 1 et 3;
- l'intensité I traversant l'éprouvette;
- les températures $T_2$ du thermocouple central (température maximale), $T_1$ et $T_3$ des thermocouples situés à une distance 1 du thermocouple central, $T_4$ du thermocouple situé à proximité d'une extrêmité de l'éprouvette.

CALCULS.

Les équations de transfert thermique au sein de l'éprouvette sont simplifiées par deux faits:
- le flux de chaleur est uniquement axial, en direction des amenées de courant refroidies; le gradient de température a seulement une composante axiale;
- les mesures de températures et de potentiel sont faites en régime stationnaire, lorsque les champs de température et de potentiel dans l'éprouvette se sont stabilisés et ne sont plus fonction du temps.

Dans le calcul de la conductivité thermique, il faut prendre en compte la variation de la résistivité électrique de l'échantillon avec la température. Celle-ci varie suivant une loi linéaire de la température et la résistance d'une tranche d'éprouvette varie de la même façon:

$$R = R0 (1 +/- aT)$$

et la chaleur dégagée par effet Joule est aussi de la forme:

$$q = q0 (1 +/- aT)$$

L'équation de répartition des températures est finalement:

$$K \, d^2T/dx^2 + q0 (1 +/- aT) = 0$$

avec a >0

L'intégration de cette équation différentielle conduit, compte tenu des conditions aux limites, aux répartitions de températures suivantes:

Dans le cas $q = q0 (1 - aT)$

$$T = ("T_e - 1/a ) * ch(rx) / ch(rL/2) + 1/a$$

Dans le cas $q = q0 (1 + aT)$

$$T = ( T_e + 1/a ) * cos(rx) / cos(rL/2) - 1/a$$

dans lesquelles

ch désigne le cosinus hyperbolique,

$r = (aq0/K))^{1/2}$

x = distance à partir du couple 2

L = longueur de l'éprouvette.

$T_e$ = température à l'extrêmité de l'éprouvette

Cette dernière valeur, Te, n'est pas accessible à la mesure. Elle est obtenue par extrapolation à partir de $T_2$, $T_3$, $T_4$

Il est clair que la connaissance de la température T, en un point x et celle du coefficient de température de la résistivité a permet le calcul de K qui intervient dans le facteur r. Les calculs sont un peu compliqués; on arrive finalement à une formule donnant la valeur de K corrigée pour tenir compte de la variation de la résistivité avec la température en fonction d'une valeur de K qui n'en tient pas compte: Kcorr = K * F, F facteur de correction.

$$K = (U_{13} * I * 1)/2A(2T_2 - T_3 - T_1) \quad (4)$$

Le facteur de correction F est égal à:

$$(1/a +/- T_e) * a * (1 - (2/3) * a * \Delta T * (1/L)^2)/(1 - a * \Delta T) \quad (5)$$

Pour le premier facteur du coefficient F, on choisira le signe + si R est de la forme R0(1+aT), le signe - si R est de la forme R0(1-aT).

A partir des valeurs relevées de U13, I, $T_1$, $T_2$, $T_3$, $T_4$, il est facile de calculer, au premier palier A la résistance entre les points 1 et 3 par la formule: $R_{13} = U_{13}/I$. Connaissant la section de l'éprouvette et la longueur 21 entre les points 1 et 3, on obtient immédiatement la résistivité de l'échantillon à une température moyenne de $(T_{1A} + T_{2A})/2 : \rho_A$.

De la même manière, au deuxième palier B, on calcule la résistivité de l'échantillon à une température moyenne de $(T_{1B} + T_{2B})/2 : \rho_B$.

Ces deux valeurs $\rho_A$ et $\rho_B$ permettent de calculer le coefficient de température a dans la formule supposée linéaire de la résistivité en fonction de la température.

Connaissant maintenant le coefficient de température a, il est possible d'atteindre la conductivité thermique moyenne de l'échantillon entre les températures $T_{1B}$ et $T_{2B}$, par application des formules (4) et (5).

Tous ces calculs sont, bien entendu, faits sur ordinateur. Dans l'exemple qui suit, il est indiqué la façon dont se présentent les résultats.

EXEMPLE.

On a mesuré la résistivité et la conductivité thermique d'un échantillon de carbone amorphe selon le procédé de l'invention. Après mise en place de l'échantillon, du manchon en produit réfractaire et des feuilles d'argent, fermeture du couvercle de l'enceinte, on fait le vide dans l'enceinte. A partir du moment où le vide atteint 2.10⁻² millibar, on attend une demi-heure avant de mettre le chauffage de l'éprouvette en route. On applique successivement les tensions U13 indiquées dans la colonne 2 du premier des tableaux ci-après et on attend à chaque fois que les températures relevées atteignent un régime stationnaire. Cela prend environ 30 minutes pour le premier palier et entre 5 et 10 minutes pour les suivants. Ces températures $T_2$, $T_1$, $T_3$ et $T_4$ sont portées dans le tableau, de même que l'intensité du courant 1. On calcule chaque fois la température moyenne Tmoy définie par la formule: Tmoy = $(2*T_2 + T_1 + T_3)/4$, que l'on porte dans la colonne (7). Enfin, la température extérieure de l'éprouvette à son extrêmité que l'on ne peut mesurer est obtenue par une formule d'extrapolation à partir de $T_2$, $T_1$ et $T_4$ (colonne 8).

| (1) | (2) | (3) | (4) | (5) | (6) | (7) | (8) |
|---|---|---|---|---|---|---|---|
| $T_2$ (°C) | U13 (mV) | I (A) | T1 (°C) | T3 (°C) | T4 (°C) | Tmoy (°C) | Te (°C) |
| 304 | 550 | 75,6 | 209,6 | 222,4 | 84 | 260 | 54,6 |
| 417 | 660,5 | 93 | 285,9 | 301,5 | 110,5 | 355,4 | 70 |
| 526 | 763,5 | 112 | 360,7 | 380,1 | 138,1 | 448,2 | 87,3 |
| 677 | 879 | 134,6 | 466,6 | 490,9 | 179,7 | 577,9 | 113,7 |
| 850 | 1012 | 163 | 595,5 | 625,7 | 231 | 730,3 | 147,3 |
| 925 | 1061,5 | 175,8 | 654,4 | 684,9 | 254,1 | 797,3 | 162,7 |
| 1004 | 1126,6 | 190,2 | 717,4 | 749,7 | 280,2 | 868,8 | 180,6 |
| 1033 | 1144 | 194,3 | 739,9 | 773,3 | 289 | 894,8 | 186,3 |
| 1120 | 1215,5 | 212,2 | 817 | 852 | 320,3 | 977,3 | 207,5 |

A partir de ces mesures et en appliquant les formules établies plus haut, on calcule par ordinateur les valeurs des résistivités électriques et des conductivités thermiques, à la température moyenne telle que calculée ci-dessus. L'ensemble de ces valeurs est reporté dans le tableau suivant:

| (1) | (2) | (3) | (4) | (5) |
|---|---|---|---|---|
| T2 (°C) | Tmoy (°C) | Résistivité microhm*cm | Conduct. non corrigée W/m/K | Conduct. corrigée W/m/K |
| 304 | 260 | 3862 | 11,4 | 10,5 |
| 417 | 355,4 | 3717 | 11,9 | 10,6 |
| 526 | 448,2 | 3567 | 13,1 | 11,4 |
| 677 | 577,9 | 3417 | 14,2 | 12,0 |
| 850 | 730,3 | 3233 | 16,5 | 13,3 |
| 925 | 797,3 | 3160 | 17,4 | 13,8 |
| 1004 | 868,8 | 3099 | 18,9 | 14,7 |
| 1033 | 894,8 | 3081 | 19,2 | 14,8 |
| 1120 | 977,3 | 2998 | 21,0 | 15,8 |

Les colonnes (1), (2) et (3) sont tout-à-fait explicites. La colonne (4) renferme les valeurs de la conductivité thermique non corrigées de la variation de la resistivité en fonction de la température, la colonne (5) les valeurs de la conductivité thermique corrigées de cette variation.

On notera que cette correction, qui n'est que de 8,5 % de la valeur corrigée à 260°C atteint 33 % à 981°C, ce qui justifie pleinement l'intêret de l'invention.

**Revendications**

**1** Procédé de mesure simultanée de la résistivité électrique et de la conductivité thermique de produits réfractaires notamment carbonés caractérisé en ce que:

- on réalise à partir d'un échantillon du produit à tester une éprouvette cylindrique de section A et de longueur L que l'on perce sur une même génératrice de cinq trous radiaux arrêtés sur l'axe de l'éprouvette en un point (22) situé au milieu de l'éprouvette, en deux points (21) et (23) symétriques par rapport au point (22) et situés entre le point (22) et les extrêmités de l'éprouvette à une distance 1 du point (22) et en deux points (24) et (25) proches des extrêmités de l'éprouvette et symétriques par rapport au point (22);
- on met en place l'éprouvette dans une enceinte (29) en serrant ses extrêmités entre deux pièces d'amenée de courant refroidies par circulation d'eau;
- on met en place des moyens de limitation du transfert thermique par rayonnement de l'éprouvette de façon à ce que le flux thermique dans l'éprouvette soit seulement axial;
- on met en place des couples thermoélectriques au fond des trous (21), (22), (23) et (24);
- on fait le vide dans l'enceinte jusqu'à $2.10^{-2}$ millibar et on attend 30 minutes avant de faire passer le courant dans l'éprouvette;
- on fait passer le courant sous une différence de potentiel déterminée;
- on mesure en continu:
  a) les températures $T_2$, $T_1$, $T_3$ et $T_4$ aux points (22), (21), (23) et (24),
  b) la différence de potentiel U13 entre les points (1) et (3)
  c) l'intensité de courant I circulant dans l'éprouvette;
- on attend que les mesures de températures, de différence de potentiel et d'intensité se soient stabilisées;
- on calcule la résistivité à la température moyenne Tmoy = $(2*T_2 + T_1 + T_3)/4$ par la formule $\rho = U13*A/(I*21)$;
- on passe alors à une différence de potentiel supérieure, on mesure les nouvelles températures $T_2$, $T_1$, $T_3$ et $T_4$, la nouvelles différence de potentiel et intensité et on calcule la nouvelle valeur de la résistivité à la nouvelle température moyenne ainsi que le coefficient de température a de la résistivité;
- on calcule alors la conductivité thermique non corrigée K à partir de la formule K = $(U_{13}*I*1)/2A(2T_2-T_3-T_1)$ et la conductivité thermique corrigée de la variation de la résistivité en fonction du temps en multipliant K par un facteur de correction F est égal à:
  $(1/a+/-T_e)*a*(1-(2/3)*a*\Delta T*(1/L)^2)/(1-a*\Delta T)$, où $T_e$ est la température à l'extrèmité de l'éprouvette, calculée par extrapolation et $\Delta T$ la différence $T_2 -T_e$;
- on procède enfin à plusieurs paliers de différences de potentiel, d'intensités et de régimes stationnaires de températures successifs ce qui permet de calculer la conductivité thermique et la résistivité électrique en fonction de la température;

**2** Dispositif de mesure simultanée de la résistivité électrique et de la conductivité thermique de produits réfractaires notamment carbonés caractérisé en ce qu'il comprend les parties essentielles suivantes:

a) une éprouvette cylindrique (26) entourée d'un manchon de produit réfractaire à faible pouvoir émissif de quelques mm d'épaisseur et percée de trous radiaux s'arrêtant sur l'axe de l'éprouvette (21), (22), (23), (24), (25), dont l'un (22) est situé dans le plan perpendiculaire à l'axe du cylindre au milieu de cet axe, deux autres, (21) et (23) sont symétriques par rapport au trou (22), à une distance 1 de ce trou, deux autres enfin, (24) et (25), eux aussi symétriques par rapport au trou (22) mais proches des extrêmités de l'éprouvette;

b) une boite cylindrique (30), en grillage métallique revêtue sur ses parois d'une feuille de papier d'argent contenant l'éprouvette et les deux pièces d'amenée de courant, elle-même placée à l'intérieur d'une enceinte;

c) une enceinte (29) dans laquelle on peut faire le vide, fermée à sa partie supérieure par un couvercle amovible protégé du rayonnement par la feuille d'argent posée sur le bord supérieur de la boite et munie de plusieurs orifices pour:
- le raccordement à la pompe à vide,
- le passage des thermocouples,
- l'arrivée de gaz pour casser le vide,
- le raccordement à un jauge à vide,
- le passage des amenées de courant;

d) une alimentation en courant électrique à l'aide d'un générateur de courant continu muni d'un variateur permettant de faire varier la tension délivrée et relié à deux pièces en cuivre refroidies serrées contre chacune des bases de l'éprouvette cylindrique;

e) des thermocouples disposes au fond des trous (21) à (24) destinés à la mesure des températures $T_1$, $T_2$, $T_3$, $T_4$ et la mesure des différences de potentiel électrique entre le thermocouple central (22) et les thermocouples (21) et (23).

f) une centrale de mesure (31) qui recueille et enregistre les variables mesurées: températures $T_1$, $T_2$, $T_3$, $T_4$, intensité I et différence de potentiel $U_{13}$.

g) un groupe de pompage destiné à mettre l'enceinte sous vide.

FIG · 1

FIG·2

EP 0 558 429 A1

Office européen des brevets

**RAPPORT DE RECHERCHE EUROPEENNE**

Numero de la demande

EP 93 42 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 283 746 (SNOW BRAND MILK PRODUCTS) * Revendications * --- | 1,2 | G 01 N 25/18 |
| A | US-A-3 453 864 (JEN CHIU) * Le document en entier * --- | 1,2 | |
| A | US-A-3 253 221 (P.A. PECKOVER) * Colonne 1, ligne 58 - colonne 2, ligne 45 * --- | 1,2 | |
| A | FR-A-2 106 650 (BREVATOME) * Revendications * ----- | 1,2 | |

DOMAINES TECHNIQUES RECHERCHES (Int. Cl.5)

G 01 N

Le présent rapport a été établi pour toutes les revendications

| Lieu de la recherche | Date d'achèvement de la recherche | Examinateur |
|---|---|---|
| LA HAYE | 14-04-1993 | KOUZELIS D |

13